# EUROPÄISCHE PATENTSCHRIFT

(11) **EP 4 281 396 B1**
(45) Veröffentlichungstag und Bekanntmachung des Hinweises auf die Patenterteilung: **26.02.2025**
(21) Anmeldenummer: 22702649.9
(22) Anmeldetag: 22.01.2022
(51) Int. Cl.: B65G 53/46

(54) **VORRICHTUNG ZUM FÖRDERN UND DOSIEREN VON SCHÜTTFÄHIGEM AUFGABEGUT**
APPARATUS FOR CONVEYING AND METERING POURABLE FEED MATERIAL
APPAREIL POUR TRANSPORTER ET DOSER UNE MATIÈRE D'ALIMENTATION VERSABLE

(30) Priorität: 22.01.2021 DE 102021101442
(43) Veröffentlichungstag der Anmeldung: 29.11.2023
(73) Patentinhaber: Siempelkamp Maschinen- und Anlagenbau GmbH, 47803 Krefeld (DE)
(72) Erfinder: NEUMÜLLER, Achim, 66121 Saarbrücken (DE); ROLL, Helmut, 85391 Allershausen (DE); SCHÖLER, Michael, 47509 Rheurdt (DE); SCHÜRMANN, Klaus, 41363 Jüchen (DE); KÖFFERS, Fabian, 47807 Krefeld (DE)
(74) Vertreter: Kurz, Andreas
(86) Internationale Anmeldenummer: PCT/EP2022/051411
(87) Internationale Veröffentlichungsnummer: WO 2022/157342

(56) Entgegenhaltungen:
- DE-A1- 2 900 922
- DE-A1- 3 442 667
- DE-C- 260 220

## Beschreibung

### Gebiet der Technik

Die Erfindung betrifft eine Vorrichtung zum Fördern und Dosieren von schüttfähigem Aufgabegut mit einer um eine erste Rotationsachse angetriebenen ersten Förderwalze und einer um eine zweite Rotationsachse gegenläufig angetriebenen zweiten Förderwalze, die innerhalb eines Gehäuses in achsparalleler Lage unter Einhaltung eines Förder- und Dosierspalts nebeneinander angeordnet sind, wobei beide Förderwalzen über ihren Walzenumfang Förderelemente aufweisen, die das über einen Guteinlauf der Vorrichtung zugeführte Aufgabegut in den Förder- und Dosierspalt einziehen und als kontinuierlichen Gutstrom in Durchströmungsrichtung zu einem Gutaustrag fördern.

### Stand der Technik

Der industrielle Produktionsprozess vom Ausgangsstoff bis zum Endprodukt umfasst in vielen Bereichen mehrere Bearbeitungsstationen, die sukzessive durchlaufen werden, bis die gewünschten Produkteigenschaften vorliegen. Als Beispiel sei die Aufbereitung faserhaltigen Aufgabeguts erwähnt, insbesondere von lignozellulosehaltigem Material wie beispielsweise Holzspäne, Einjahrespflanzen, Stroh, Bagasse und dergleichen, die nacheinander die Bearbeitungsstationen Vorzerkleinern, Waschen, Entwässern, Vordämpfen, Kochen, Zerfasern, Trocknen und Trennen durchlaufen. Die dabei gewonnenen Fasern können zur Zellstoffgewinnung bei der Papierherstellung oder als Holzfasern bei der Herstellung von Holzfaserprodukten und Holzwerkstoffen dienen, beispielsweise von MDF-Produkten. Entsprechendes gilt für schüttfähige Kunststoffe wie Folienschnitzel oder Granulate, die nach dem Waschen, Vorzerkleinern und Reinigen beispielsweise einem Agglomerator zugeführt werden. Mittels geeigneter Förder- und Dosiervorrichtungen wird in den einzelnen Bearbeitungsstationen das Aufgabegut in der notwendigen Menge pro Zeiteinheit bereitgestellt.

Als geeignete Förder- und Dosiervorrichtung sind beispielsweise Doppelwalzenförderer bekannt, deren beide achsparallele Förderwalzen gegenläufig rotieren und das Aufgabegut in den Spalt zwischen den Förderwalzen einziehen, wobei durch die Regelung der Drehzahl der Förderwalzen die Förderleistung einstellbar ist. Mit derartigen Vorrichtungen ist im Allgemeinen eine Förderung und Dosierung des Aufgabeguts mit ausreichender Genauigkeit möglich. Probleme bereitet jedoch kompakt vorliegendes oder zur Brückenbildung neigendes Aufgabegut, das von den Förderwalzen nur unzureichend in den Walzenspalt eingezogen wird. Aber auch Aufgabegut mit annähernd fließfähiger Konsistenz, das den Walzenspalt ohne Zutun der Förderwalzen ungewollt durchströmt, kann sich als problematisch erweisen. Eine kontrollierte Dosierung des Aufgabeguts allein durch geeignete Drehzahleinstellung der Förderwalzen ist in diesen Fällen nicht mehr möglich.

Darüber hinaus ist aus der DE 260 220 C eine Vorrichtung zum Entleeren der Saugkammern von Saugluftförderern bekannt, deren Entladevorrichtung als Kapselräderwerk ausgebildet ist. Die beiden Zahnräder des Kapselräderwerks saugen das Fördergut aus der Saugkammer heraus, während sie gleichzeitig das Eindringen atmosphärischer Luft in die Saugkammer verhindern. Zur Erhöhung der Abdichtung der Saugkammer kann eine Dichtungsfläche von unten gegen die Zahnräder zur Anlage gebracht werden.

### Zusammenfassung der Erfindung

Vor diesem Hintergrund liegt der Erfindung die Aufgabe zugrunde, eine Vorrichtung zur Förderung und Dosierung von schüttfähigem Aufgabegut anzugeben, mit der eine kontrollierte Förderung und exakte Dosierung von Aufgabegut unterschiedlichster Art und Beschaffenheit möglich ist.

Diese Aufgabe wird durch eine Vorrichtung mit den Merkmalen des Anspruchs 1 gelöst.

Vorteilhafte Ausführungsformen ergeben sich aus den Unteransprüchen.

Der Grundgedanke der Erfindung besteht darin, den Gutstrom durch eine erfindungsgemäße Vorrichtung durch geeignete konstruktive Maßnahmen zu jedem Zeitpunkt kontrollieren zu können. Erfindungsgemäß beschränkt sich diese Kontrolle nicht allein auf den Betriebszustand des Förderns und Dosierens, sondern umfasst ebenfalls einen Stillstand der Vorrichtung, bei dem der Materialstrom gleichzeitig mit dem Stopp der Förderwalzen zum Erliegen kommen soll.

Der Erfindung gelingt dies durch das erfindungsgemäße Zusammenwirken der Förderelemente der Förderwalzen und des Strömungswiderstandselements im Förder- und Dosierspalt, wobei die Förderelemente das Aufgabegut aktiv aus dem Guteinlauf in den Förder- und Dosierspalt zwischen den Förderwalzen einziehen. Dort bilden die Förderwalzen mit ihrem Walzenmantel zusammen mit dem Strömungswiderstandselement jeweils räumlich begrenzte Bereiche, in denen das Aufgabegut in Abhängigkeit der Drehzahl der Förderwalzen von den Förderelementen durch den Förder- und Dosierspalt beschleunigt wird.

Das führt zunächst zu dem Vorteil eines gleichmäßigen Gutstroms durch eine erfindungsgemäße Vorrichtung selbst bei kompakt vorliegendem oder zu Brückenbildung neigendem Aufgabegut, da die Förderelemente erst eine Auflockerung des Aufgabeguts im Guteinlauf bewirken, bevor es im Weiteren erfasst und dem Förder- und Dosierspalt zugefördert wird. Auf diese Weise wird Aufgabegut in ausreichender Menge im Guteinlauf aufbereitet, um den Förder- und Dosierspalt mit konstanter Menge pro Zeiteinheit beschicken zu können. Im Ergebnis ist auf diese Weise eine äußerst exakte Dosierung des Aufgabeguts innerhalb enger Grenzen durch eine Drehzahlregelung des Antriebs der Förderwalzen erzielbar.

Gleichzeitig bilden bei einem Maschinenstillstand die Förderwalzen und das Strömungswiderstandselement eine Barriere im Förder- und Dosierspalt, die den Fluss des Aufgabeguts durch die Vorrichtung unterbindet. Das stromaufwärts des Förder- und Dosierspalts befindliche Aufgabegut wird somit im Guteinlauf zurückgehalten bis die Vorrichtung erneut in Betrieb genommen wird.

Das Strömungswiderstandselement ist vorzugsweise derart ausgebildet, dass der Gutstrom nicht nur gebremst, sondern darüber hinaus in vorteilhafter Weise geteilt und gelenkt wird. In diesem Sinne besitzt das Strömungswiderstandselement zwei sich über dessen gesamte Länge erstreckende Führungsflächen, deren dem Gutstrom entgegenweisende Längsränder eine gemeinsame Längskante ausbilden, die den Gutstrom in zwei Teilströme unterteilt. Vorzugsweise liegt dabei die Längskante oberhalb der von den beiden Rotationsachsen aufgespannten Ebene, wodurch eine möglichst frühe Teilung erfolgt, was eine gleichmäßige Aufteilung des Gutstroms begünstigt.

In vorteilhafter Weiterbildung dieser Ausführungsform divergieren die beiden Führungsflächen des Strömungswiderstandselements in Richtung des Gutstroms und folgen dabei in radialem Abstand dem Umfang der Förderwalzen. Auf diese Weise wird eine intensive Einwirkung der Förderelemente auf das Aufgabegut gewährleistet. Vorzugsweise verlaufen dabei die Führungsflächen im Querschnitt konkav, um im Bereich des Zusammenwirkens mit den Förderwalzen einen Strömungskanal zu bilden, der sich je nach relativer Lage des Strömungswiderstandselements gegenüber den Förderwalzen in Strömungsrichtung weitet, verengt oder im Wesentlichen konstant bleibt.

Gemäß einer bevorzugten Ausführungsform der Erfindung ist die Lage des Strömungswiderstandselements im Förder- und Dosierspalt einstellbar, vorzugsweise dessen vertikale Lage gegenüber den Förderwalzen, um den Abstand der Führungsflächen zu den Förderwalzen und damit den auf das Aufgabegut ausgeübten Strömungswiderstand verändern zu können. In einer einfachen Ausführungsform geschieht dies mit einer Befestigung des Strömungswiderstandselements an der Vorrichtung mit in Langlöcher greifenden Befestigungsmitteln. Alternative Justiereinrichtungen bestehen beispielsweise aus Spindeltrieben oder Einstellkeilen mit gegenläufigen Keilflächen, die mit Hilfe von Aktoren betätigt werden, so dass eine Einstellung des Strömungswiderstandselements auch während des Förder- und Dosierbetriebs möglich ist.

In einer weiteren Ausführungsform der Erfindung ist das Strömungswiderstandselement derart nachgiebig an der Vorrichtung gelagert, dass es bei einer von dem Gutstrom ausgeübten außerordentlichen Belastung in Durchströmungsrichtung des Aufgabeguts ausweichen kann. Die nachgiebige Lagerung kann dabei elastisch sein, das heißt, dass das Strömungswiderstandselement nach dem Ende der außerordentlichen Belastung wieder in seine ursprüngliche Lage zurückfedert. Auf diese Weise stellt sich ein Selbstregulierungseffekt ein, wobei bei höherem Strömungswiderstand das Strömungswiderstandselement nachgibt und auf diese Weise den auf den Gutstrom ausgeübten Strömungswiderstand verringert. Alternativ kann die nachgiebige Lagerung auch durch eine dauerhafte Verformung der Lagerung des Strömungswiderstands-elements erreicht werden. Bei außerordentlicher Belastung des Strömungs-widerstandselements, beispielsweise infolge von Fremdkörpern im Aufgabegut, brechen oder verformen sich Lagerteile, was ein Ausweichen des Strömungswiderstandselements in Durchströmungsrichtung ermöglicht. Größeren Schäden an der Vorrichtung kann auf diese Weise vorgebeugt werden. Im Rahmen der Erfindung liegen ebenfalls Ausführungsformen, bei denen eine elastische Lagerung des Strömungswiderstandselements mit einer dauerhaft verformbaren Lagerung kombiniert ist.

Die Förderelemente bestehen in vorteilhafter Weiterbildung der Erfindung aus radial aus dem Walzenmantel hervorstehenden, stabförmigen Förderzinken und/oder axial am Walzenmantel verlaufenden Förderleisten, die im Zuge der Rotation der Förderwalzen einen Mitnahmeeffekt auf das Aufgabegut ausüben. Weisen die Förderwalzen sowohl Förderleisten als auch Förderzinken auf, bilden die Förderzinken vorzugsweise einen radialen Überstand über die Förderleisten aus, um die erwähnte Auflockerung des Aufgabeguts zu bewirken und den Mitnahmeeffekt zu verstärken.

Nach einer weiteren Ausführungsform der Erfindung besteht der für die Förderung und Dosierung wirksame Walzenmantel der Förderwalzen aus einer im Umfangsrichtung alternierenden Abfolge von Förderelementen, die entlang von Mantellinien in einheitlichen Umfangsabstand angeordnet sind, und dazwischen angeordneten Förderböden. Dabei können die Förderböden unmittelbar von Umfangsabschnitten der Grundkörper der Förderwalzen gebildet sein, oder von separaten Böden, die auf den Grundkörpern der Förderwalzen liegen oder in radialem Abstand zu diesen angeordnet sind. Die auf diese Weise entstehenden Umfangsabschnitte der Förderwalzen bilden im Zusammenwirken mit dem Strömungswiderstandselement temporäre, räumlich begrenzte Aufnahmebereiche, in denen das Aufgabegut kontrolliert durch den Förder- und Dosierspalt geführt wird. Der Vorteil dieser Ausführungsform liegt in der Möglichkeit, äußerst exakt dosieren zu können.

Ohne sich darauf einzuschränken wird die Erfindung nachstehend anhand in den Zeichnungen dargestellter Ausführungsbeispiele näher erläutert, wobei weitere Merkmale und Vorteile der Erfindung offenbar werden. Dabei werden soweit möglich für gleiche oder funktionsgleiche Merkmale unterschiedlicher Ausführungsformen gleichlautende Bezugszeichen verwendet.

### Kurze Beschreibung der Zeichnungen

Es zeigt
- Fig. 1: einen Schrägansicht auf eine erfindungsgemäße Vorrichtung,
- Fig. 2: einen Querschnitt durch die in Fig. 1 dargestellte Vorrichtung in der xz-Ebene,
- Fig. 3: eine Schrägansicht auf eine erfindungsgemäße Förderwalze in größerem Maßstab,
- Fig. 4: eine Schrägansicht auf ein erfindungsgemäßes Strömungswiderstandselement in größerem Maßstab,
- Fig. 5: eine Ansicht auf einen Teilabschnitt der in Fig. 3 dargestellten Förderwalze,
- Fig. 6: eine Detaildarstellung des in Fig. 2 mit VI gekennzeichneten Bereichs,
- Fig. 7: einen Querschnitt durch eine zweite Ausführungsform einer erfindungsgemäßen Vorrichtung mit einer nachgiebigen Lagerung des Strömungswiderstandselements, und
- Fig. 8: einen Querschnitt durch eine dritte Ausführungsform einer erfindungsgemäßen Vorrichtung mit einer Justiereinrichtung zur Höhenverstellung des Strömungswiderstandselements.

### Beschreibung der Ausführungsformen

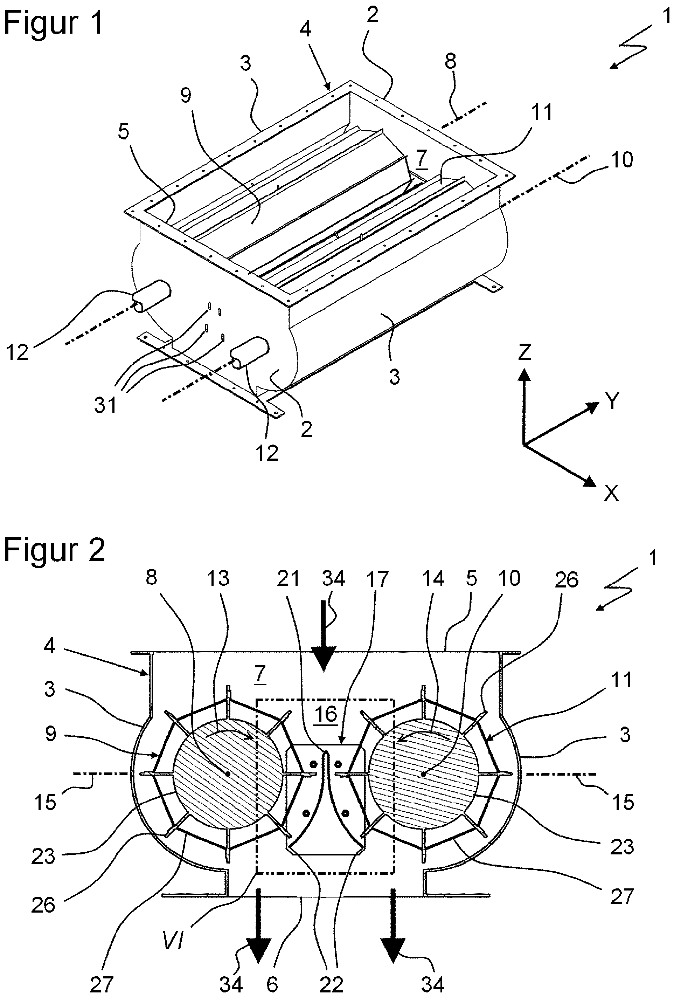

Die Fig. 1 und 2 zeigen den Aufbau einer erfindungsgemäßen Vorrichtung 1 im Überblick. Die Vorrichtung 1 besitzt ein von Querwänden 2 und Längswänden 3 gebildetes Gehäuse 4, das eine obere Öffnung 5 und gegenüberliegend eine untere Öffnung 6 besitzt. An die obere Öffnung 5 kann zur Bildung eines Guteinlaufs eine Schurre, ein Zuführschacht, Trichter oder dergleichen anschließen. Die untere Öffnung 6 dient als Gutabzug, über den das Aufgabegut beispielsweise einem Schneckenförderer oder Bandförderer oder direkt einer Bearbeitungsmaschine wie einer Mühle oder dergleichen zuführbar ist. Die Durchströmungsrichtung des Aufgabeguts in der Vorrichtung 1 ist mit den Pfeilen 34 angegeben.

Das Gehäuse 4 umschließt einen Förder- und Dosierraum 7, in dem eine um eine erste Rotationsachse 8 angetriebene erste Förderwalze 9 angeordnet ist und in achsparalleler Lage eine um eine zweite Rotationsachse 10 gegenläufig angetriebene zweite Förderwalze 11. Die Antriebswellen 12 der Förderwalzen 9, 11 sind in Drehlagern an den Querwänden 2 gehalten und jeweils mit einem drehzahlgesteuerten Antrieb gekoppelt. Drehlager und Antrieb sind der besseren Übersichtlichkeit wegen in den Fig. 1 und 2 nicht dargestellt ist. Die gegenläufigen Rotationsrichtungen der beiden Förderwalzen 9, 11 sind durch die beiden Pfeile 13, 14 versinnbildlicht.

Insbesondere aus Fig. 2 geht die relative Anordnung der beiden Förderwalzen 9, 11 zueinander hervor. Man erkennt, dass die erste Rotationsachse 8 und zweite Rotationsachse 10 eine horizontale Ebene 15 aufspannen, in der sich die erste Förderwalze 9 und zweite Förderwalze 11 über ihre gesamte axiale Länge im lichten Abstand unter Einhaltung eines Förder- und Dosierspalts 16 gegenüberliegen.

In dem Förder- und Dosierspalt 16 erstreckt sich achsparallel zu den Rotationsachsen 8, 10 und freitragend zwischen den Querwänden 2 ein balkenförmiges Strömungswiderstandselement 17, das mittels einer Justiereinrichtung senkrecht zur Ebene 15 höhenverstellbar im Förder- und Dosierspalt 16 gehalten ist.

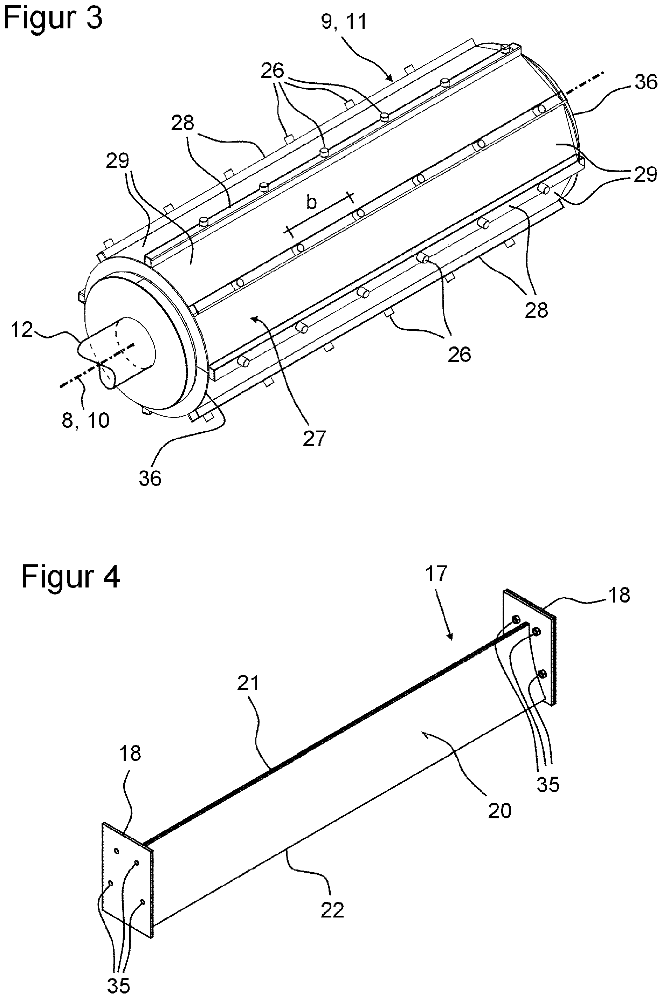

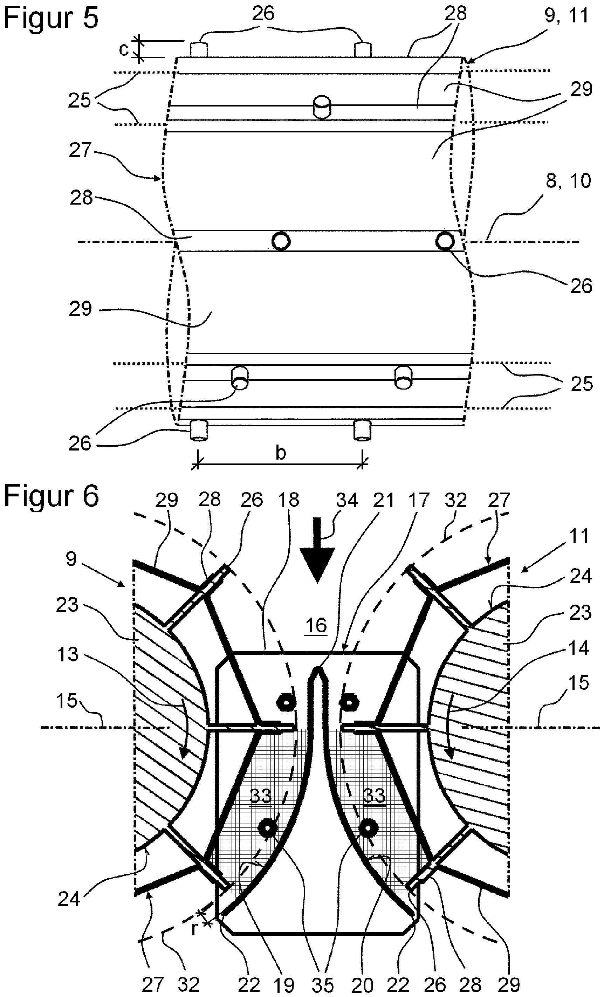

Die erfindungsgemäße Ausgestaltung des Strömungswiderstandselements 17 ergibt sich vor allem aus einer Zusammenschau der Fig. 4 und 6, die erkennen lassen, dass die sich gegenüberliegenden Enden des Strömungswiderstandselements 17 mit jeweils einer achssenkrecht ausgerichteten Kopfplatte 18 mit Befestigungsbohrungen 35 versehen sind.

Zur höhenverstellbaren Befestigung des Strömungswiderstandselements 17 fluchten die Befestigungsbohrungen 35 mit vertikal verlaufenden Langlöchern 31 in den Querwänden 2 (Fig. 1). Mittels Befestigungsschrauben, die sich durch die Langlöcher 31 und Befestigungsbohrungen 35 erstrecken, ist das Strömungswiderstandselement 17 am Gehäuse 4 in der vorbestimmten Höhenposition gegenüber der Ebene 15 festlegbar.

In dem Bereich zwischen den Kopfplatten 18 besitzt das Strömungswiderstandselement 17 einen konstanten Querschnitt, gebildet von einem Hohl- oder Vollprofil mit einer ersten Führungsfläche 19, die der ersten Förderwalze 9 zugewandt ist, und einer zweiten Führungsfläche 20, die der zweiten Förderwalze 11 zugewandt ist. Mit ihrem oberen Längsrand bilden die beiden Führungsflächen 19, 20 eine gemeinsame Längskante 21, die oberhalb der Ebene 15 liegt und mittig zwischen den beiden Förderwalzen 9, 11 entgegen der Durchströmungsrichtung 34 in Richtung der oberen Öffnung 5 weist. Die gegenüberliegenden unteren Längsränder 22 hingegen verlaufen ebenfalls achsparallel in gegenseitigen Abstand zueinander unterhalb der Ebene 15. Daraus ergibt sich ein von der oberen Längskante 21 zu den unteren Längsrändern 22 divergierender Verlauf der beiden Führungsflächen 19, 20, so dass das Strömungswiderstandselement 17 einen keilförmigen Querschnitt besitzt. Ohne sich darauf einzuschränken folgt im vorliegenden Ausführungsbeispiel der Verlauf der Führungsflächen 19, 20 im Wesentlichen einer Kreisbahn um die Rotationsachsen 8, 10 (Fig. 6).

Den konstruktiven Aufbau der Förderwalzen 9, 11 zeigen insbesondere die Fig. 2, 3, 5 und 6. Demnach besitzen die Förderwalzen 9, 11 einen voll- oder hohlzylindrischen Grundkörper 23 mit im vorliegenden Ausführungsbeispiel kreisförmigen Querschnitt, wobei gleichseitige polygonale Querschnitte wie zum Beispiel eine Sechseck- oder Achteckform gleichermaßen geeignet sind. Aus der Mantelfläche 24 des Grundkörpers 23 erstrecken sich mit einheitlichem Umfangs- bzw. Winkelabstand, beispielsweise von 30° oder 45° oder 60°, entlang von Mantellinien 25 radial gerichtete Förderzinken 26. Die Förderzinken 26 einer gemeinsamen Mantellinie 25 halten einen gegenseitigen axialen Abstand b ein. Beispielsweise kann der axiale Abstand b 40 mm oder weniger betragen. Dabei können die Förderzinken 26 zweier in Umfangsrichtung benachbarter Mantellinien 25 mit axialem Versatz zueinander angeordnet sein oder auf gemeinsamen Umfangslinien liegen. Die Förderzinken 26 sind beispielsweise von Stäben aus verschleißfestem Material gebildet und mit dem Grundkörper 23 verschraubt oder verschweißt. Die freien Enden der Förderzinken 26 können stumpf oder als Kante oder als Spitze ausgebildet sein.

Jede Förderwalze 9, 11 besitzt zudem einen koaxial zur Rotationsachse 8, 10 angeordneten, zur Förderung und Dosierung des Aufgabeguts wirksamen Walzenmantel 27, der - wie im vorliegenden Ausführungsbeispiel - in radialem Abstand den Grundkörper 23 umgibt, aber auch ganz oder teilweise an der Mantelfläche 24 des Grundkörpers 23 anliegen oder unmittelbar von der Mantelfläche 24 des Grundkörpers 23 gebildet sein kann.

Der Walzenmantel 27 setzt sich bezogen auf den Walzenquerschnitt abwechselnd aus Förderleisten 28 und Förderböden 29 zusammen, die jeweils über die gesamte axiale Länge einer Förderwalze 9, 11 verlaufen. Die Förderleisten 28 erstrecken sich dabei zwischen oder entlang der Förderzinken 26 einer Mantellinie 25, an denen sie starr befestigt sind. Mit ihren radial inneren Längsrändern sind die Förderleisten 28 mit den Längsrändern der Förderböden 29 fest verbunden, so dass eine über den Umfang des Walzenmantels 27 geschlossene Kontur entsteht, mit einer alternierenden Abfolge von Förderleisten 28 mit Förderzinken 26 und Förderböden 29. Auf diese Weise bilden jeweils zwei benachbarte Förderleisten 28 mit dazwischenliegendem Förderboden 29 achsparallel verlaufende, im Querschnitt trogförmige und in Richtung zum Strömungswiderstandselement 17 offene Aufnahmen, die im Zusammenwirken mit den Förderzinken 26 das Aufgabegut in den Förder- und Dosierspalt 16 einziehen.

Die relative Lage der Förderleisten 28 zu den Förderzinken 26 ist so gewählt, dass die Förderzinken 26 mit ihren freien Enden jeweils einen radialen Überstand c über den radial äußeren Längsrand 30 der Förderleisten 28 ausbilden (Fig. 5). Beispielsweise kann die radiale Höhe der Förderleisten 28 zwischen 3 mm und 30 mm liegen und/oder der Überstand c in einem Bereich zwischen 10 mm und 30 mm.

Die axialen Enden der Förderwalzen 9, 11 werden jeweils von einer Ringscheibe 36 gebildet, die mit ihrem inneren Umfang koaxial auf dem dortigen Wellenabschnitt 12 sitzt und an deren äußeren Umfangsbereich der Walzenmantel 27 anschließt.

Fig. 6 zeigt die nähere Ausgestaltung der Vorrichtung 1 im Bereich des Förder- und Dosierspalts 16. Man erkennt die einander zugewandten Teilbereiche der ersten Förderwalze 9 und zweiten Förderwalze 11, jeweils mit Grundkörper 23, Förderzinken 26, Förderleisten 28 und Förderboden 29. Im Zuge der Rotation der Förderwalzen 9, 11 beschreiben die Enden der Förderzinken 26 einen Flugkreis, der mit dem Bezugszeichen 32 angegeben ist.

Achsparallel zwischen den beiden Förderwalzen 9, 11 verläuft das keilförmige Strömungswiderstandselement 17, dessen obere Längskante 21 oberhalb der Ebene 15 liegt und das sich mit seinen Führungsflächen 19, 20 mit gleichbleibendem radialem Abstand r zu den Flugkreisen 32 in den Bereich unterhalb der Ebene 15 erstreckt. Beispielsweise beträgt der Abstand r maximal 10 mm und liegt vorzugsweise in einem Bereich zwischen 1 mm und 5 mm.

Die Abmessung des Strömungswiderstandselements 17 senkrecht zur Ebene 15 ist derart, dass in jeder Stellung der Förderwalzen 9, 11 zumindest eine Förderleiste 28 mit Förderzinken 26 der ersten Führungsfläche 19 bzw. zweiten Führungsfläche 20 radial gegenüberliegt. In Fig. 6 ist ein Betriebszustand gezeigt, bei dem zwei in Umfangsrichtung benachbarte Förderleisten 28 mit Förderzinken 26 gleichzeitig den Führungsflächen 19, 20 radial gegenüberliegen und auf diese Weise im Zuge der Rotation der Förderwalzen 9, 11 temporäre Kammern 33 bilden, in denen das Aufgabegut kontrolliert durch den Förder- und Dosierspalt 16 geführt wird. Der Umfangsabstand zweier benachbarter Förderleisten 28 ist in diesem Fall kleiner als die Abmessung der Führungsflächen 19, 20 zwischen oberer Längskante 21 und den unteren Längsrändern 22. Die Dosierung des Aufgabeguts erfolgt durch geeignete Drehzahleinstellung der Förderwalzen 9, 11. Bei einem Stillstand der Vorrichtung 1 bilden das Strömungswiderstandselement 17 und die radial gegenüberliegenden Förderleisten 28 mit Förderzinken 26 ein Strömungshindernis, das einen ungewollten Materialdurchgang durch den Förder- und Dosierspalt 16 unterbindet.

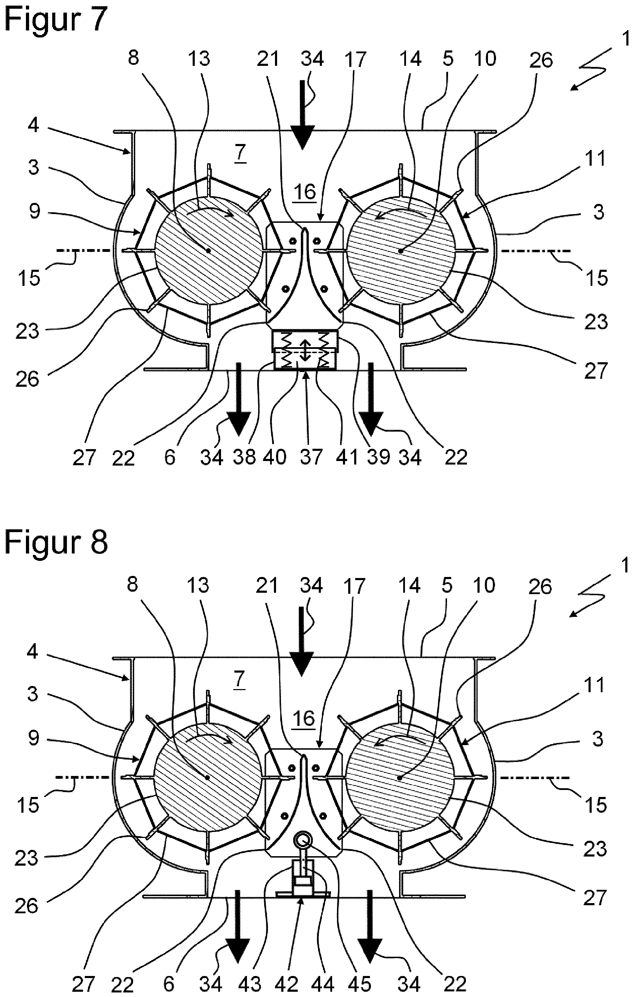

Die in den Fig. 7 und 8 gezeigten Ausführungsformen entsprechen weitgehend den unter den Fig. 1 bis 6 beschriebenen, so dass zur Vermeidung von Wiederholungen unter Verwendung gleichlautender Bezugszeichen auf das dort Gesagte Bezug genommen wird.

Im Unterschied dazu ist das Strömungswiderstandselements 17 gemäß der Ausführungsform nach Fig. 7 in Durchströmungsrichtung 34 nachgiebig gelagert. Zu diesem Zweck besitzt die Vorrichtung 1 mindestens ein Federelement 37, das zwischen Gehäuse 4 und Strömungswiderstandselement 17 angeordnet ist. Beispielsweise kann im Bereich der Kopfplatten 18 jeweils ein Federelement 37 vorgesehen sein oder das Federelement 37 erstreckt sich über die gesamte axiale Länge des Strömungswiderstandselements 17.

Das Federelement 37 umfasst ein am Gehäuse 4 befestigtes Unterteil 38 mit umlaufenden Seitenwänden und ein am Strömungswiderstandselement 17 befestigtes Oberteil 39 mit ebenfalls umlaufenden Seitenwänden, wobei die Seitenwände von Unterteil 38 und Oberteil 39 einander zugewandt sind und einen Hohlraum 40 umschließen. Der Abstand der Seitenwände des Unterteils 38 ist gegenüber dem Abstand der Seitenwände des Oberteils 39 derart geringer, dass Unterteil 38 und Oberteil 39 in Durchströmungsrichtung 34 ineinander einsteckbar sind, wobei deren Seitenwände überlappen.

Die Federwirkung des Federelements 37 wird von einem oder mehreren elastisch verformbaren Elementen 41 erzeugt, die sich zwischen Unterteil 38 und Oberteil 39 erstrecken. Ein elastisch verformbares Element 41 kann beispielsweise aus einer Schraubenfeder, einer Gasfeder, einem elastisch komprimierbaren Material wie zum Beispiel Kautschuk oder dergleichen bestehen.

Unter Einwirkung einer hohen Last auf das Strömungswiderstandselement 17 bedingt durch das strömende Aufgabegut bzw. darin enthaltene Fremdkörper weicht das Strömungswiderstandselement 17 in Durchströmungsrichtung 34 nach unten aus. Der Abstand zwischen Strömungswiderstandselement 17 und Förderwalzen 9, 11 wird dabei größer und in der Folge der auf den Gutstrom ausgeübte Strömungswiderstand kleiner. Nach Beendigung des außerordentlichen Lastzustands stellt das Federelement 37 das Strömungswiderstandselement 17 in seine ursprüngliche Lage zurück. Die Führung des Strömungswiderstandselements 17 kann beispielsweise entlang der Langlöcher 31 erfolgen, in die Führungszapfen am Strömungswiderstandselement 17 eingreifen.

Anstelle eines elastisch verformbaren Federelements 37 kann die nachgiebige Lagerung auch von einer Einheit gebildet sein, die sich bei Überschreiten einer Grenzlast dauerhaft verformt, so dass das Strömungswiderstandselement 17 nicht mehr in die ursprüngliche Lage zurückgestellt wird. Zu diesem Zweck kann die nachgiebige Lagerung anstelle der in Fig. 7 dargestellten elastischen Elemente 41 nicht weiter dargestellte plastisch verformbare Elemente oder Sollbruchstellen besitzen.

Gegenstand von Fig. 8 ist eine Ausführungsform, die sich durch eine gezielte Einstellbarkeit des Strömungswiderstandselements 17 im Förder- und Dosierspalt 16 senkrecht zur Ebene 15 auszeichnet, beispielsweise zur Anpassung an die Eigenschaften des Aufgabeguts und zur Optimierung der Dosier- und Förderfunktion der Vorrichtung 1. Zu diesem Zweck ist zwischen dem Gehäuse 4 und dem Strömungswiderstandselement 17 eine Justiereinrichtung 42 angeordnet, zum Beispiel in Form einer Zylinderkolbeneinheit, deren Zylinder 34 am Gehäuse 4 der Vorrichtung 1 befestigt ist und deren beweglicher Kolben mit Kolbenstange 44 an eine Achse 45 angelenkt ist, die sich zwischen den beiden Kopfplatten 18 erstreckt. Alternative Justiereinrichtungen 42 können anstelle der Zylinderkolbeneinheit einen Spindeltrieb aufweisen oder werden von horizontal verstellbaren Keilen gebildet, die mit ihren gegenläufig geneigten Keilflächen aufeinanderliegen, wobei eine Höhenverstellung des Strömungswiderstandselements 17 durch eine Relativbewegung der Keile zueinander erfolgt. Auch hier können die Langlöcher 31 eine Führung des Strömungswiderstandselements 17 während der Einstellung bilden, die mit Führungszapfen am Strömungswiderstandselement 17 zusammenwirken.

Auch wenn in den Zeichnungen nicht explizit dargestellt, so liegen im Rahmen der Erfindung ebenso Ausführungsformen, bei denen der Walzenmantel 27 unmittelbar von der Mantelfläche 24 des Walzengrundkörpers 23 gebildet ist, oder Ausführungsformen, bei denen die Förderelemente allein von Förderzinken 26 oder allein von Förderleisten 28 gebildet sind. Ebenso umfasst die Erfindung Kombinationen von Merkmalen unterschiedlicher Ausführungsformen auch wenn diese nicht explizit beschrieben sind. Beispielsweise kann eine nachgiebige Lagerung des Strömungswiderstandselements 17 mit einer Justiereinrichtung 42 kombiniert sein.

## Patentansprüche

1. Vorrichtung zum Fördern und Dosieren von schüttfähigem Aufgabegut mit einer um eine erste Rotationsachse (8) angetriebenen ersten Förderwalze (9) und einer um eine zweite Rotationsachse (10) gegenläufig angetriebenen zweiten Förderwalze (11), die innerhalb eines Gehäuses (4) in achsparalleler Lage unter Einhaltung eines Förder- und Dosierspalts (16) nebeneinander angeordnet sind, wobei beide Förderwalzen (9, 11) über ihren Walzenumfang Förderelemente (26, 28) aufweisen, die das über einen Guteinlauf der Vorrichtung (1) zugeführte Aufgabegut (34) in den Förder- und Dosierspalt (16) einziehen und als kontinuierlichen Gutstrom in Durchströmungsrichtung (34) zu einem Gutaustrag fördern, **dadurch gekennzeichnet, dass** in dem Förder- und Dosierspalt (16) zwischen der ersten Förderwalze (9) und zweiten Förderwalze (11) ein sich über die axiale Länge der beiden Förderwalzen (9, 11) erstreckendes Strömungswiderstandselement (17) angeordnet ist, das zum Fördern und Dosieren des Aufgabeguts (34) mit den beiden Förderwalzen (9, 11) zusammenwirkt, wobei zwischen Strömungswiderstandselement (17) und erster Förderwalze (9) sowie zwischen Strömungswiderstandselement (17) und zweiter Förderwalze (11) jeweils ein Abstand eingehalten ist, und wobei das Aufgabegut zwischen dem Strömungswiderstandselement (17) und den beiden Förderwalzen (9, 11) durch den Förder- und Dosierspalt (16) tritt.

2. Vorrichtung nach Anspruch 1, **dadurch gekennzeichnet, dass** das Strömungswiderstandselement (17) balkenförmig ausgebildet ist mit einer der ersten Förderwalze (9) zugewandten ersten Führungsfläche (19) und einer der zweiten Förderwalze (11) zugewandten zweiten Führungsfläche (20).

3. Vorrichtung nach Anspruch 2, **dadurch gekennzeichnet, dass** die erste Führungsfläche (19) und zweite Führungsfläche (20) jeweils mit ihrem entgegen der Durchströmungsrichtung (34) weisenden ersten Längsrand eine gemeinsame Längskante (21) ausbilden.

4. Vorrichtung nach Anspruch 3, **dadurch gekennzeichnet, dass** die Längskante (21) stromaufwärts der von der ersten Rotationsachse (8) und zweiten Rotationsachse (10) aufgespannten Ebene (15) angeordnet ist.

5. Vorrichtung nach einem der Ansprüche 2 bis 4, **dadurch gekennzeichnet, dass** das erste Führungsfläche (19) und zweite Führungsfläche (20) in Richtung ihrer in Durchströmungsrichtung (34) weisenden zweiten Längsränder (22) divergieren.

6. Vorrichtung nach einem der Ansprüche 2 bis 5, **dadurch gekennzeichnet, dass** die erste Führungsfläche (19) und zweite Führungsfläche (20) im Querschnitt konkav ausgebildet sind und die Flugkreise (32) der Förderelemente (26, 28) der ersten Förderwalze (9) und zweiten Förderwalze (11) mit der ersten Führungsfläche (19) und der zweiten Führungsfläche (20) einen radialen Abstand r einhalten, der in Rotationsrichtung(13, 14) konstant bleibt oder sich in Rotationsrichtung (13, 14) vergrößert oder sich in Rotationsrichtung (13, 14) verkleinert.

7. Vorrichtung nach einem der Ansprüche 1 bis 6, **dadurch gekennzeichnet, dass** das die Lage des Strömungswiderstandselements (17) gegenüber den Förderwalzen (9, 11) mittels einer Justiereinrichtung (42) in bzw. entgegen der Durchströmungsrichtung (34) einstellbar ist.

8. Vorrichtung nach Anspruch 7, **dadurch gekennzeichnet, dass** die Justiereinrichtung (42) Langlöcher (31) umfasst und das Strömungswiderstandselement (17) mittels sich durch die Langlöcher (31) erstreckender Befestigungsschrauben (35) an der Vorrichtung (1) befestigt ist.

9. Vorrichtung nach Anspruch 7, **dadurch gekennzeichnet, dass** die Justiereinrichtung (42) einen zwischen Strömungswiderstandselement (17) und Vorrichtung (1) wirkenden Spindeltrieb oder Zylinderkolbeneinheit (43, 44) umfasst.

10. Vorrichtung nach Anspruch 7, **dadurch gekennzeichnet, dass** die Justiereinrichtung (42) zwischen Strömungswiderstandselement (17) und Vorrichtung (1) angeordnete Einstellkeile mit gegenläufigen Keilflächen umfasst, die relativ zueinander verstellbar sind.

11. Vorrichtung nach einem der Ansprüche 1 bis 10, **dadurch gekennzeichnet, dass** die Förderelemente (26, 28) in einheitlichem Umfangsabstand entlang von Mantellinien (25) der ersten Förderwalze (9) und zweiten Förderwalze (11) angeordnet sind.

12. Vorrichtung nach einem der Ansprüche 1 bis 11, **dadurch gekennzeichnet, dass** die Förderelemente von Förderleisten (28) und/oder Förderzinken (26) gebildet sind, die sich radial aus der Mantelfläche (24, 27) der Förderwalzen (9, 11) erstrecken.

13. Vorrichtung nach einem der Ansprüche 1 bis 12, **dadurch gekennzeichnet, dass** die Förderelemente von Förderleisten (28) und Förderzinken (26) gebildet sind, wobei die Förderleisten (28) zwischen oder entlang der Förderzinken (26) entlang einer Mantellinie (25) angeordnet sind.

14. Vorrichtung nach Anspruch 12 oder 13, **dadurch gekennzeichnet, dass** die Förderzinken (26) gegenüber den Förderleisten (28) einen radialen Überstand a ausbilden.

15. Vorrichtung nach einem der Ansprüche 1 bis 14, **dadurch gekennzeichnet, dass** der zur Förderung und Dosierung des Aufgabeguts (34) wirksame Walzenmantel (27) zusätzlich zu den Förderelementen (26, 28) Förderböden (29) aufweist und sich die Förderböden (29) jeweils zwischen in Walzenumfangsrichtung benachbarten Förderelementen (26, 28) erstrecken.

16. Vorrichtung nach einem der Ansprüche 1 bis 15, **dadurch gekennzeichnet, dass** der zur Förderung und Dosierung des Aufgabeguts wirksame Walzenmantel (27) einen polygonartigen oder kreisförmigen Querschnitt aufweist.

17. Vorrichtung nach Anspruche 15 oder 16, **dadurch gekennzeichnet, dass** die erste Förderwalze (9) und/oder zweite Förderwalze (11) einen zylindrischen Grundkörper (23) besitzen und die Förderböden (29) radial außerhalb des Grundkörpers (23) angeordnet sind.

18. Vorrichtung nach einem der Ansprüche 1 bis 17, **dadurch gekennzeichnet, dass** das Strömungswiderstandselement (17) in Durchströmungsrichtung (34) nachgiebig gelagert ist.

## Claims

1. Device for conveying and metering free-flowing feed material, the device comprising a first conveyor roller (9) driven about a first rotation axis (8) and a second conveyor roller (11) driven in the opposite direction about a second rotation axis (10), which rollers are arranged next to one another within a housing (4) in an axially parallel position while maintaining a conveying and metering gap (16), both conveyor rollers (9, 11) having conveyor elements (26, 28) over the roller circumference thereof, which draw the feed material (34) supplied via a material inlet of the device (1) into the conveying and metering gap (16) and convey it as a continuous material flow in the flow direction (34) to a material output, **characterized in that** a flow resistance element (17) is arranged in the conveying and metering gap (16) between the first conveyor roller (9) and the second conveyor roller (11), which flow resistance element extends over the axial length of the two conveyor rollers (9, 11) and cooperates with the two conveyor rollers (9, 11)for conveying and metering the feed material (34), in each case a distance being maintained between the flow resistance element (17) and the first conveyor roller (9) and between the flow resistance element (17) and the second conveyor roller (11), and the feed material passing through the conveying and metering gap (16) between the flow resistance element (17) and the two conveyor rollers (9, 11).

2. Device according to claim 1, **characterized in that** the flow resistance element (17) is bar-shaped and has a first guide surface (19) facing the first conveyor roller (9) and a second guide surface (20) facing the second conveyor roller (11).

3. Device according to claim 2, **characterized in that** the first guide surface (19) and the second guide surface (20) each form a common longitudinal edge (21) with the first longitudinal edge thereof pointing against the flow direction (34).

4. Device according to claim 3, **characterized in that** the longitudinal edge (21) is arranged upstream of the plane (15) spanned by the first rotation axis (8) and the second rotation axis (10).

5. Device according to any of claims 2 to 4, **characterized in that** the first guide surface (19) and the second guide surface (20) diverge in the direction of the second longitudinal edges (22) thereof pointing in the flow direction (34).

6. Device according to any of claims 2 to 5, **characterized in that** the first guide surface (19) and the second guide surface (20) are concave in cross-section and the flight circles (32) of the conveyor elements (26, 28) of the first conveyor roller (9) and the second conveyor roller (11) having the first guide surface (19) and the second guide surface (20) maintain a radial distance r which remains constant in the direction of rotation (13, 14) or increases in the direction of rotation (13, 14) or decreases in the direction of rotation (13, 14).

7. Device according to any of claims 1 to 6, **characterized in that** the position of the flow resistance element (17) relative to the conveyor rollers (9, 11) can be adjusted in or against the flow direction (34) by means of an adjusting apparatus (42).

8. Device according to claim 7, **characterized in that** the adjusting apparatus (42) comprises elongate holes (31) and the flow resistance element (17) is fastened to the device (1) by means of fastening screws (35) extending through the elongate holes (31).

9. Device according to claim 7, **characterized in that** the adjusting apparatus (42) comprises a spindle drive or cylinder-piston unit (43, 44) which acts between the flow resistance element (17) and the device (1).

10. Device according to claim 7, **characterized in that** the adjusting apparatus (42) comprises adjusting wedges which are arranged between the flow resistance element (17) and the device (1) and have opposing wedge surfaces which are adjustable relative to one another.

11. Device according to any of claims 1 to 10, **characterized in that** the conveyor elements (26, 28) are arranged at a uniform circumferential distance along shell lines (25) of the first conveyor roller (9) and the second conveyor roller (11).

12. Device according to any of claims 1 to 11, **characterized in that** the conveyor elements are formed by conveyor strips (28) and/or conveyor tines (26) which extend radially from the shell surface (24, 27) of the conveyor rollers (9, 11).

13. Device according to any of claims 1 to 12, **characterized in that** the conveyor elements are formed by conveyor strips (28) and conveyor tines (26), the conveyor strips (28) being arranged between or along the conveyor tines (26) along a shell line (25).

14. Device according to either claim 12 or claim 13, **characterized in that** the conveyor tines (26) form a radial projection a relative to the conveyor strips (28).

15. Device according to any of claims 1 to 14, **characterized in that** the roller shell (27) effective for conveying and metering the feed material (34) has conveyor floors (29) in addition to the conveyor elements (26, 28), and the conveyor floors (29) each extend between conveyor elements (26, 28) which are adjacent in the circumferential direction of the roller.

16. Device according to any of claims 1 to 15, **characterized in that** the roller shell (27) effective for conveying and metering the feed material has a polygonal or circular cross-section.

17. Device according to either claim 15 or claim 16, **characterized in that** the first conveyor roller (9) and/or the second conveyor roller (11) have a cylindrical main body (23) and the conveyor floors (29) are arranged radially outside the main body (23).

18. Device according to any of claims 1 to 17, **characterized in that** the flow resistance element (17) is resiliently mounted in the flow direction (34).

## Revendications

1. Dispositif pour le transport et le dosage de matériaux en vrac avec un premier rouleau convoyeur (9) entrainé autour d'un premier axe de rotation (8) et avec un deuxième rouleau convoyeur (11) entrainé en sens inverse autour d'un deuxième axe de rotation (10), lesquels sont disposés dans un carter (4) l'un à côté de l'autre et leurs axes en parallèle tout en respectant un écart de transport et de dosage (16), les deux rouleaux de transport (9, 11) présentant sur leur pourtour des éléments de transport (26, 28) qui entraînent le matériau d'alimentation (34) alimenté par une entrée de matériau du dispositif (1) vers l'écart de transport et de dosage (16) et le transporte en un flot continu en sens d'écoulement (34) vers une sortie de matériau, **caractérisé en ce que** dans l'écart de transport et de dosage (16) entre le premier rouleau de transport (9) et le deuxième rouleau de transport (11) est disposé un élément de résistance à l'écoulement (17) s'étendant sur toute la longueur axiale des deux rouleaux de transport (9,11) et interagissant avec les deux rouleaux de transport (9, 11) pour le transport et le dosage du matériau d'alimentation (34), en respectant ce faisant un écart entre l'élément de résistance à l'écoulement (17) et le premier rouleau de transport (9) ainsi qu'entre l'élément de résistance à l'écoulement (17) et le deuxième rouleau de transport (11), et le matériau d'alimentation passant entre l'élément de résistance à l'écoulement (17) et les deux rouleaux de transport (9, 11) par l'écart de transport et de dosage (16).

2. Dispositif selon la revendication 1, **caractérisé en ce que** l'élément de résistance à l'écoulement (17) est en forme de poutre avec une première surface de guidage (19) faisant face au premier rouleau de transport (9) et une deuxième surface de guidage (20) faisant face au deuxième rouleau de transport (11).

3. Dispositif selon la revendication 2, **caractérisé en ce que** la première surface de guidage (19) et la deuxième surface de guidage (20) forment avec leur premier bord longitudinal orienté à l'encontre du sens d'écoulement (34) un bord longitudinal commun (21).

4. Dispositif selon la revendication 3, **caractérisé en ce que** le bord longitudinal (21) est situé en amont du plan (15) déterminé par le premier axe de rotation (8) et le deuxième axe de rotation (10).

5. Dispositif selon l'une des revendications 2 à 4, **caractérisé en ce que** la première surface de guidage (19) et la deuxième surface de guidage (20) divergent en direction de leur deuxième bord longitudinal (22) orienté en sens d'écoulement (34).

6. Dispositif selon l'une des revendications 2 à 5, **caractérisé en ce que** la première surface de guidage (19) et la deuxième surface de guidage (20) ont une section transversale concave et **en ce que** les trajectoires circulaires (32) des éléments de transport (26, 28) du premier rouleau de transport (9) et du deuxième rouleau de transport (11) respectent un écart radial r par rapport à la première surface de guidage (19) et à la deuxième surface de guidage (20), écart qui reste constant ou qui augmente dans le sens de rotation (13, 14) ou qui diminue dans le sens de rotation (13, 14).

7. Dispositif selon l'une des revendications 1 à 6, **caractérisé en ce que** la position de l'élément de résistance à l'écoulement (17) est réglable par rapport aux rouleaux de transport (9, 11) à l'aide d'un système de réglage (42) dans le sens d'écoulement (34) ainsi que dans le sens inverse.

8. Dispositif selon la revendication 7, **caractérisé en ce que** le système de réglage (42) comprend des trous longitudinaux (31) et **en ce que** l'élément de résistance à l'écoulement (17) est fixé au dispositif (1) par des vis de fixations (35) traversant les trous longitudinaux (31).

9. Dispositif selon la revendication 7, **caractérisé en ce que** le système de réglage (42) comprend une broche filetée ou une unité à vérin (43,44) agissant entre l'élément de résistance à l'écoulement (17) et le dispositif (1).

10. Dispositif selon la revendication 7, **caractérisé en ce que** le système de réglage (42) comprend, entre l'élément de résistance à l'écoulement (17) et le dispositif (1), des cales de réglage réglables les unes par rapport aux autres dont les surfaces de calage sont déplaçables en sens opposés.

11. Dispositif selon l'une des revendications 1 à 10, **caractérisé en ce que** les éléments de transport (26, 28) sont disposés à espaces réguliers le long des génératrices (25) du premier rouleau de transport (9) et du deuxième rouleau de transport (11).

12. Dispositif selon l'une des revendications 1 à 11, **caractérisé en ce que** les éléments de transport sont formés de listeaux de transport (28) et/ou de dents de transport (26) qui dépassent radialement hors de la surface d'enveloppe (24, 27) des rouleaux de transport (9, 11).

13. Dispositif selon l'une des revendications 1 à 12, **caractérisé en ce que** les éléments de transport sont formés de listeaux de transport (28) et de dents de transport (26), les listeaux de transport (28) étant disposés entre ou le long des dents de transport (26) le long d'une génératrice (25).

14. Dispositif selon la revendication 12 ou 13, **caractérisé en ce que** les dents de transport (26) forment une saillie radiale a par rapport aux listeaux de transport (28).

15. Dispositif selon l'une des revendications 1 à 14, **caractérisé en ce que** l'enveloppe de rouleau (27) active dans le transport et le dosage du matériau d'alimentation (34) dispose en plus des éléments de transport (26, 28) de fonds de transport (29), lesquels fonds de transport (29) s'étendent entre des éléments de transport (26, 28) adjacents dans la direction circonférentielle du rouleau.

16. Dispositif selon l'une des revendications 1 à 15, **caractérisé en ce que** l'enveloppe de rouleau (27) active dans le transport et dosage du matériau d'alimentation (34) présente une section transversale de forme polygonale ou circulaire.

17. Dispositif selon la revendication 15 ou 16, **caractérisé en ce que** le premier rouleau de transport (9) et/ou le deuxième rouleau de transport (11) possède un corps principal cylindrique (23) et **en ce que** les fonds de transport (29) sont disposés radialement hors du corps principal (23).

18. Dispositif selon l'une des revendications 1 à 17, **caractérisé en ce que** l'élément de résistance à l'écoulement (17) est logé souplement dans le sens d'écoulement (34).
